# EUROPEAN PATENT APPLICATION

(11) **EP 1 492 178 A2**
(43) Date of publication of application: **29.12.2004**
(21) Application number: 04253400.8
(22) Date of filing: 08.06.2004
(51) Int. Cl.: H01M 4/04, H01M 8/12

(54) **Methods for applying electrodes or electrolytes to a substrate**

(30) Priority: 24.06.2003 US 603733
(71) Applicant: Hewlett-Packard Development Company, L.P., Houston, TX 77070 (US)
(72) Inventor: Meyer, Neal W., Corvallis, OR 97330 (US); Mardilovich, Peter, Corvallis, OR 97330 (US); Herman, Gregory S., Albany, OR 97321 (US)
(74) Representative: Tollett, Ian

(57) **Abstract**

Fuel cell components (e.g., anodes, cathodes, or electrolytes) are made by the application (100) of a colloidal solution to a substrate (50), drying (110) of the solution allowing particles to remain on the substrate, and sintering (130) of the particles.

## Description

The present invention relates in general to a method for preparing a substrate, and in particular to deposition and sintering of materials onto an electrode or electrolyte.

A fuel cell is a device that generates electricity and heat by electrochemically combining a gaseous fuel and an oxidizing gas using an ion conducting electrolyte. A fuel cell's primary reaction may involve the transportation of oxygen ions through the electrolyte from a cathode material to an anode material. As fuel (*e.g.*, hydrogen (H₂) or methane (CH₄)) arrives at the anode, the fuel may react with oxygen ions from the electrolyte, forming, *inter alia,* water and releasing electrons (*e*-) to an external circuit. This release of electrons may be used to power electronic equipment such as, by way of example only, automobiles, computers, or cell phones.

Crystallized materials may have possible applications, as an anode, cathode, electrolyte, or barrier layer between them, when applied to the electrolyte or electrode of a fuel cell. It may be desirable to manufacture crystallized layers or films onto the electrolytes or electrodes. The quality of the crystallized material (*i*.*e*., uniformity, thickness, continuity (number of defects) and other such properties) may generally affect the performance of the crystallized material and/or the electrolyte or electrode. In addition, some of these properties may be exaggerated when the films are thin.

Additionally, it may be desirable to dope particular layers of crystallized material applied to the electrolyte or electrode. The uniformity of the doping may affect the performance of the doped material.

The technique or fabrication method used in preparing a crystallized compound layer or film may be selected based on a tradeoff of certain properties. For example, some fabrication methods provide a mechanism for very thin films, but may have low film uniformity. Other processes may provide better uniformity, but may not be capable of achieving very thin films. It may also be difficult to achieve thin films on porous substrate materials because the particle size of the material to be coated is so small that it does not plug the pore, leaving a portion of the substrate (*i*.*e*., the portion of the substrate inside the pore) open to the outside, possibly defeating the purpose of coating the substrate.

In addition, uniform doping of thin films may be difficult in some instances. If a doped material is applied by vapor deposition, variability in the deposition rates of the various materials may induce variability in the doping level and the structure of the deposited material. It may also be possible to apply doped materials by applying doped pressed powered materials to the substrate. This technique may require the use of binders and/or lubricants. In this technique, the doped pressed powder may be applied to the substrate and sintered. Although the sintering process may be intended to drive out any binders or lubricant, it may not be completely successful, leaving trace impurities and/or a film or "skin" at the interface of the doped material and the substrate. In fuel cells, these skins and/or other impurities may affect the efficiency the ion transfer from the substrate to the doped material. If the coated substrate is sintered at temperatures high enough to burn off the impurities and/or skin, shrinkage and or expansion of the coating and/or substrate may cause distortion.

Disclosed herein are methods for applying a material to a substrate such as an electrolyte or an electrode. Particularly, the methods herein may include applying a colloidal solution to a substrate and allowing the solution to dry on the substrate, leaving a film of particles on the substrate. Further embodiments may include fuel cell components made by the methods described herein, and electronic devices comprising fuel cell components made by the methods described herein.

For a detailed description of preferred embodiments of the invention, reference will now be made to the accompanying drawings in which:

Figure 1 shows a flow diagram of a process according to embodiments of the present invention;

Figure 2 shows a flow diagram of an alternative process according to embodiments of the present invention;

Figure 3 shows a schematic drawing of a coated substrate and a corresponding schematic graph of the concentration of components in the substrate and coating in accordance with embodiments of the present invention; and

Figure 4 shows schematic drawings of coated substrates prior to sintering in accordance with embodiments of the present invention.

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

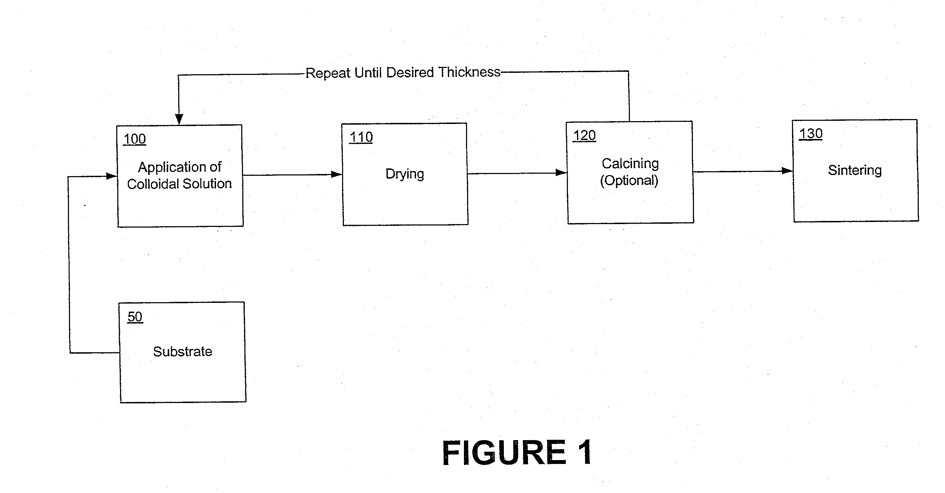

Referring now to Figure 1, there is shown a method for applying a crystalline material to a substrate, such as an electrolyte or an electrode. The method shown in Figure 1 includes the application of colloidal solution 100, a drying step 110, an optional calcining step 120, and a sintering step 130. Substrate 50 is first coated with a colloidal solution in application step 100. The colloidal solution comprises a solvent as well as particles which are desired to be deposited on substrate 50. In some embodiments the particles suspended in the colloidal solution be substantially uniform in size in order for the particles to pack efficiently when deposited on the substrate. The particles need not all be of the same composition. The coated substrate 50 is allowed to dry in drying step 110. Drying step 110 may be carried out in any number of ways, for example, active drying (*e.g.*, heated bisquing) or passive drying (*e.g.*, evaporation at ambient or controlled conditions). In drying step 110, the solvent dries and a layer of particles is deposited on the substrate. In some embodiments, it may be desirable to fill the void space between the particles with materials such as solutions containing salts or by chemical vapor deposition. The coated substrate may be then optionally calcined in calcining step 120 at temperatures of, for example, about 200°C to 600°C. By way of example only, the conversion of aqueous cerium hydroxides to hydrated ceria can occur at temperatures as low as about 200°C. Steps 100, 110, and optionally 120 may be repeated until the coating on the substrate reaches a desired thickness. After the desired thickness is reached, the coated substrate may be then finally sintered in sintering step 130 at, for example, temperatures of about 600°C to 1500°C.

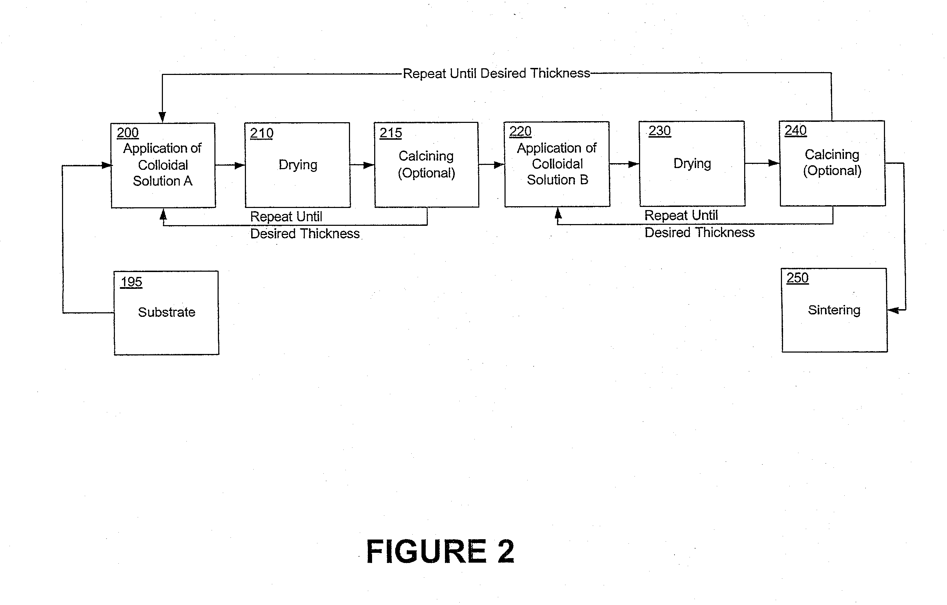

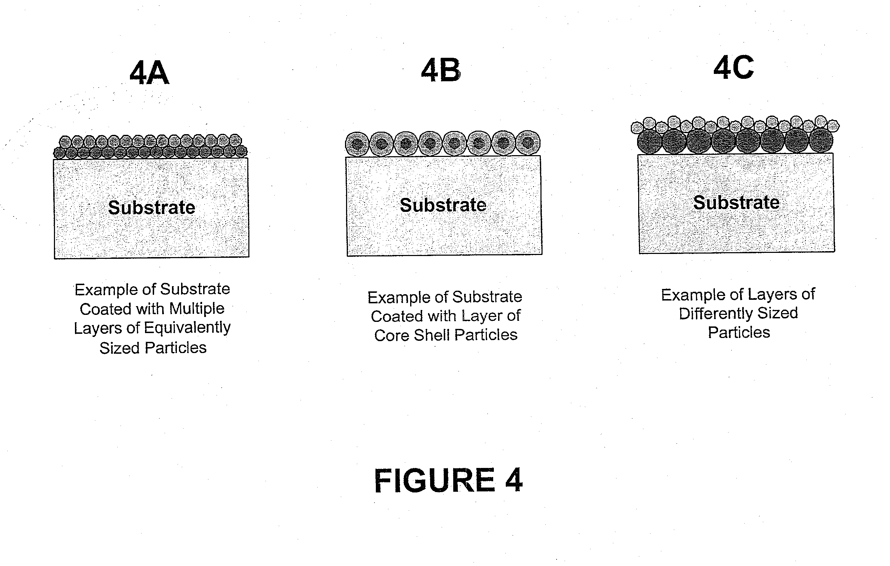

Referring now to Figure 2, there is shown a method for applying a crystalline material to a substrate, such as an electrolyte or electrode. The method comprises application of solution A in step 200, drying 210, optional calcining step 215, application of solution B in step 220, drying 230, optional calcining step 240, and final sintering step 250. In some embodiments the size of the particles suspended in both solution A and solution B may be carefully chosen. Particularly, the particles of each individual solution may be substantially uniform in size in order to achieve efficient packing on the surface of the substrate. In addition, the relative size of the particles in solution A and solution B may be chosen such that when the particles of solution B are deposited on top of the particles of solution A, the particles of solution B are efficiently packed (*e.g*., as shown in Figure 4C).

Substrate 195 is coated with colloidal solution A in application step 200. Colloidal solution A may comprise any of a variety of materials suspended in a solvent. The coated substrate may be then allowed to dry in drying step 210. Drying step 210 can be carried out in a number of ways, including, for example, active drying (*e.g.*, heated bisquing) or passive drying (*e.g.*, evaporation at ambient or controlled conditions). The coated substrate may be optionally calcined in calcining step 215, for example, at temperatures of about 200°C to 600°C. Steps 200, 210, and optionally 215 may be repeated until the layer of particles on substrate 195 is a desired thickness.

Substrate 195 may then be coated with colloidal solution B in application step 220. Colloidal solution B may comprises any of a variety of materials suspended in a solvent. Both the suspended materials and the solvent of solution B may be of a different composition and/or size than the suspended materials and the solvent of solution A. After application 220, the coated substrate may be dried in drying step 230. Drying step 230 may be carried out in a number of ways, including, for example, active drying (*e.g.*, heated bisquing) or passive drying (*e.g.*, evaporation at ambient or controlled conditions). The coated substrate may be optionally calcined in calcining step 240, for example, at temperatures of about 200°C to 600°C. Steps 220, 230, and optionally 240 may be repeated until a desired thickness is reached. The coated substrate may then be sintered in sintering step 250, for example, at temperatures of about 600°C to 1500°C.

In some embodiments, the coating that remains after final sintering may comprise Yttrium Stabilized Zirconia (YSZ), Scandium Doped Zirconia (ScZ), Samarium Doped Ceria (SDC), Gadolinium Doped Ceria (GDC), Yttrium Doped Ceria/Calcium Doped Ceria (YDC/CDC), Bismuth Yttrium Oxide (BYO), Barium Cerate/Strontium Cerate (BCN/SYC), Copper-Substituted Bismuth Vanadates (BICUVOX), or combinations thereof. Each colloidally deposited layer may be of a single individual material (*e.g.*, ZrO₂) or of multiple materials, *e.g.,* binary (YSZ), tertiary (BYO), quaternary, etc. A final structure of colloidally deposited layers can be of any number of layers comprised of any number of materials. The sintering steps and profiles as well as the diffusion coefficients of the different materials will determine the amount of mixing, if any, between the different layers. Additionally, in some embodiments, a layer of buffer materials may be deposited between two other layers. For example, in some embodiments a buffer layer may be deposited between a cathode and an electrolyte or between an anode and an electrolyte to prevent or reduce interaction between the layers.

By way of example only, if the desired coating comprises YSZ, a suspension of zirconia particles of substantially uniform size X may be applied to a substrate. The solvent in the solution is then allowed to dry, leaving a layer of zirconia on the substrate. A suspension of yttria particles of substantially uniform size Y is then applied to the substrate and allowed to dry, leaving a layer of yttria particles on top of the layer of zirconia particles (*e.g.*, as is shown in Figure 4A for similarly sized particles and as shown in Figure 4C for differently sized particles). The coated substrate may then be calcined at, for example, temperatures of between 200°C to 600°C.

In some embodiments, rather than apply two different particles (*i*.*e*., zirconia and yttria), it may be desirable to apply two different sizes of the same particle (*e.g*., YSZ particles of size X followed by YSZ particles of size Y). This may be desirable in instances in which the substrate is porous and particle size X is larger than the pore size of the substrate (*e.g.*, as is shown in Figure 4C). The first layer of particles may serve to block the pores of the substrate, allowing smaller particles of size Y to be deposited on top of the first layer of particles, therefore, achieving tighter packing of the particles. In some instances, it may be desirable for size Y particles to be larger than the spacing between the size X particles on the substrate to prevent size Y particles from falling into the spacing between the size X particles. The coated substrate may then be sintered to achieve a thin film on the porous substrate.

It may also be desirable in some embodiments to use core-shell compounds as the suspended particles (*e.g.*, as is shown in Figure 4B) in the solutions. Core shell compounds are particles which comprise a core of one composition and a shell of a second composition around the core. Examples of core shell compounds which may be desirable for use in some embodiments are materials that are low-temperature oxygen ion conducting materials, such as, BICUVOX , SDC, GDC for the core material, where the shell material may be used to help lessen or prevent reduction of the core material and can be materials, such as, SDC, GDC, YSZ, or ScZ for a BICUVOX core; or YSZ or ScZ for an SDC or a GDC core. Furthermore, the shell material can be chosen to reduce the ionic grain boundary losses that result in reduced ionic conductivity for the electrolyte, (*e.g.*, an SDC or GDC shell on a YSZ core).

In other embodiments, it may be desirable to apply a layer of SDC onto a substrate, such as an anode or cathode. A variety of materials may be used as anodes, such as, without exclusion, Ni-YSZ, Cu-YSZ, Ni-SDC, Ni-GDC, Cu-SDC, Cu-GDC, and mixtures thereof. Some non-limitative examples of materials which may be suitable as cathodes include , for example SmₘSrₙCoO_{3-δ}, BaₘLaₙCoO_{3-δ}, GdₘSrₙCoO_{3-δ}, La₁₋ₘSrₘMnO₃, or mixtures thereof. For example, to apply an SDC coating, ceria particles of size X and samaria particles of size Y are sequentially coated onto the substrate. In embodiments where samarium is the stabilizing dopant, samaria particles of size Y may be smaller than the ceria particles of size A. Alternatively, pre-doped particles of SDC may be applied in two or three different particle sizes. The coating may then be sintered.

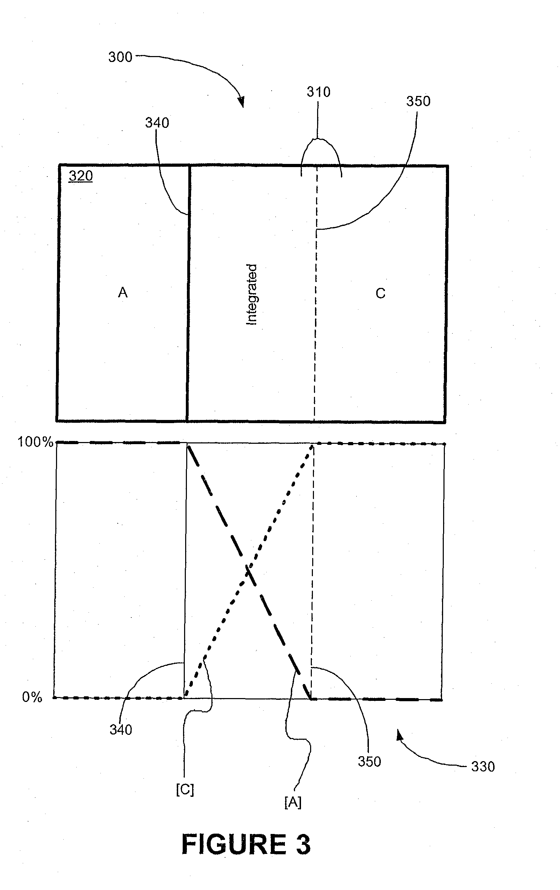

Referring now to Figure 3, other embodiments may include depositing material onto a substrate which the desired deposited material is doped with material of the same composition as the substrate to decrease the mismatch in thermal expansion of the substrate and the deposited material. One method of doing this may be to graduate the transition between the substrate and the coating. An example of embodiments with a graduated coating is shown in Figure 3. This gradation may be among any two or more layers, *e.g.*, in a ten layer stack it could be, for example, among layers seven, eight, and nine.

Material 300 is comprised of substrate 320 and coating 310. In the embodiments shown in Figure 3, substrate 320 comprises substantially pure A. Coating 310 comprises both A and C. At interface 340, the concentration of A in coating 310 may be near one hundred percent. Moving from interface 340 through coating 310, the concentration of A in coating 310 may decrease to zero at secondary interface 350. A schematic graph of the relative concentrations of materials A and C in coated material 300 is shown in graph 330. As is shown in schematic graph 330, the concentration of A ([A]) in the substrate is 100% and begins to decrease at interface 340 and drops to zero at secondary interface 350. Conversely, the concentration of C ([C]) in the coating 310 is zero at the interface and increases to 100% at the secondary interface. Schematic graph 330 is merely a graph designed to demonstrate the gradated transition from substrate 320 to coating 310. It is not drawn to scale, and it is not necessary that the concentration of A and C increase or decrease continuously or linearly or that there be multiple stages of differing concentration. It may be the case that the desired coating comprises two zones - a first of A+C and a second of only C. In addition, it is anticipated that there may be embodiments in which there are more than two components.

This graduated concentration coating may, for example, be applied by methods such as those described above with respect to Figure 1 and Figure 2. For example, successive layers may be applied to substrate 320, with successive layers comprising less A and more C. Because of the gradated transfer from substrate 320 into coating 310, the abrupt change in thermal expansion coefficient may be avoided and less thermal stress may result, thus, reducing the probability of distortion.

In some embodiments, it may be desirable to make an electrolyte using an extremely high oxygen ion conductor, such as, for example, copper-substituted bismuth vanadate, which is prone to reduction, and coat it with a second material that is more stable in a reducing atmosphere, such as, for example YSZ.

The above discussion is meant to be illustrative of a number of preferred embodiments of the present invention. Numerous variations and modifications will become apparent to those skilled in the art once the above disclosure is fully appreciated. It is intended that the following claims be interpreted to embrace all such variations and modifications.

## Claims

1. A method for preparing a substrate (50), the method comprising:
applying (100) a colloidal solution comprising particles and a solvent to a substrate (50);
drying (110) the colloidal solution, wherein the particles remain on the substrate (50); and
sintering (130) the particles;
wherein the substrate (50) comprises a first electrode or a first electrolyte and wherein the particles comprise a second electrode or a second electrolyte.

2. A method as claimed in claim 1 wherein the substrate (50) comprises an electrode or an electrolyte and the particles comprise an electrolyte.

3. A method as claimed in claim 1 or 2 wherein the substrate (50) comprises a fuel cell electrode.

4. A method as claimed in any preceding claim further comprising applying (220) a second colloidal solution comprising second particles and a second solvent to the substrate (195), and drying (230) the second colloidal solution,
wherein the second particles remain on the substrate (195).

5. A method as claimed in any preceding claim wherein the substrate (50) comprises copper-substituted bismuth vanadate, GDC, or SDC, and the particles comprise bismuth vanadate, GDC or SDC, and the particles comprise SDC, GDC, YSZ or ScZ.

6. A method as claimed in any preceding claim wherein the substrate (50) is porous and the size of the average diameter of the particles is larger than the average diameter of the pores.

7. A method as claimed in any preceding claim wherein the particles comprise an electrolyte.

8. A method as claimed in any preceding claim wherein as least a portion of the particles comprise substantially the same material as the substrate.
